# EUROPEAN PATENT APPLICATION

(11) **EP 4 191 486 A1**
(43) Date of publication of application: **07.06.2023**
(21) Application number: 21854048.2
(22) Date of filing: 16.07.2021
(51) Int. Cl.: G06Q 10/04, B65G 3/02

(54) **MANAGEMENT SYSTEM, MANAGEMENT DEVICE, MANAGEMENT METHOD, AND MANAGEMENT PROGRAM**

(30) Priority: 03.08.2020 JP 2020131548
(71) Applicant: Kurita Water Industries Ltd., Tokyo 164-0001 (JP); Hitachi, Ltd., Tokyo 100-8280 (JP)
(72) Inventor: KIKKAWA Takashi, Tokyo 164-0001 (JP); IKEGAWA Naoki, Tokyo 164-0001 (JP); KURINO Takuji, Tokyo 164-0001 (JP); TAKANOSE Koh, Tokyo 100-8280 (JP); TAKA Daisuke, Tokyo 100-8280 (JP); KAIYA Emi, Tokyo 100-8280 (JP)
(74) Representative: TBK
(86) International application number: PCT/JP2021/026816
(87) International publication number: WO 2022/030228

(57) **Abstract**

To provide a management system, a management apparatus, a management method, and a program capable of assessing an occurrence of powder dust while taking into consideration an environment in which a pile is placed and processing applied to the pile. An aspect of the present invention provides a management system of a material which is a steelmaking raw material and/or a fuel for power generation and which is managed outdoors. The management system includes an information managing unit, a weather information acquiring unit, and an assessing unit. The information managing unit is configured to manage, for each of piles of the material, powder dust prevention processing information including a presence or absence of existing powder dust prevention processing with respect to the material and a type of the powder dust prevention processing. The weather information acquiring unit is configured to acquire weather information indicating outdoor meteorological phenomena forecasted for the future. The assessing unit is configured to assess an occurrence of powder dust for each of the piles based on the powder dust prevention processing information and the weather information.

## Description

### Technical Field

The present invention relates to a management system, a management device (apparatus), a management method, and a management program.

### Background Art

Coal, iron ore, dust, slag, and the like as steelmaking raw materials at ironworks and coal and the like as fuel for power generation at electric power plants are stored in yards in a state of piles. In such a pile, powder dust is created when a moisture content of a pile surface layer drops and drying occurs. In consideration thereof, water is sprayed on the pile in order to suppress powder dust by increasing the moisture content of the pile.

Conventionally, water spraying on such a pile has been periodically performed at a predetermined frequency. However, with such a method, water spraying may be performed even when powder dust is already suppressed due to a material such as coal described above holding a high moisture content or a surface of the material being coated with resin.

In addition, an increase in moisture content due to such water spraying may cause various problems. For example, when iron ore, coal, dust, and slag as steelmaking raw materials have a high moisture content, clogging may occur in a hopper, a silo, a belt conveyor transfer part, or the like. Furthermore, when coal as a coke raw material has a high moisture content, since a bulk density of coke charged into a coke oven drops, production decreases. Moreover, when a moisture content contained in a material that constitutes a pile in a yard becomes excessively high, the material constituting the pile may run off and the likelihood of a pile collapse may increase.

In order to prevent such excess water spraying, for example, PTL 1 proposes a method of scanning a surface of a pile with a near-infrared water content meter to measure a moisture content and spraying water to locations where the moisture content is below a threshold.

### Citation List

### Patent Literature

PTL1: JP 2008-50076 A

### Summary of Invention

### Technical Problem

With the method described in PTL 1, since water is sprayed solely based on a present water content of the surface of a pile, water spraying may be performed even in a case where, for example, there is no wind and an occurrence of powder dust is not expected even though the pile surface is dry. From a viewpoint of preventing problems caused by an increase in the water content described above, a viewpoint of conservation of water resources, a viewpoint of water spraying costs, and the like, an amount of water spraying is preferably as small as possible insofar as an occurrence of powder dust can be prevented.

In view of the circumstances described above, an object of the present invention is to provide a management system, a management apparatus, a management method, and a program capable of assessing an occurrence of powder dust while taking into consideration an environment in which a pile is placed and processing applied to the pile.

### Solution to Problem

An aspect of the present invention provides a management system of a material which is a steelmaking raw material and/or a fuel for power generation and which is managed outdoors. The management system includes an information managing unit, a weather information acquiring unit, and an assessing unit. The information managing unit is configured to manage, for each of piles of the material, powder dust prevention processing information including a presence or absence of existing powder dust prevention processing with respect to the material and a type of the powder dust prevention processing. The weather information acquiring unit is configured to acquire weather information indicating outdoor meteorological phenomena forecasted for the future. The assessing unit is configured to assess an occurrence of powder dust for each of the piles based on the powder dust prevention processing information and the weather information.

Specifically, each of the aspects described below may be provided.

The management system described above, wherein the weather information includes a wind speed in the outdoors forecasted for the future.

The management system described above, further including a moisture content information acquiring unit, wherein the moisture content information acquiring unit is configured to acquire moisture content information indicating a moisture content contained in the material.

The management system described above, wherein the moisture content information includes a moisture content contained in a surface layer of the piles.

The management system described above, further including a first output unit, wherein the first output unit is configured to display, for each of the piles, an assessment result of an occurrence of the powder dust by the assessing unit.

The management system described above, further including a second output unit, wherein the second output unit is configured to display, for each of the piles, a presence or absence of the existing powder dust prevention processing.

The management system described above, further including a processing executing unit, wherein the processing executing unit is configured to apply new powder dust prevention processing on a specific pile based on an assessment result of an occurrence of the powder dust by the assessing unit.

A management apparatus of a material which is a steelmaking raw material and/or a fuel for power generation and which is managed outdoors, the management apparatus including an information managing unit, a weather information acquiring unit, and an assessing unit, wherein the information managing unit is configured to manage, for each of piles of the material, powder dust prevention processing information including a presence or absence of existing powder dust prevention processing with respect to the material and a type of the powder dust prevention processing, the weather information acquiring unit is configured to acquire weather information indicating outdoor meteorological phenomena forecasted for the future, and the assessing unit is configured to assess an occurrence of powder dust for each of the piles based on the powder dust prevention processing information and the weather information.

A management method of a material which is a steelmaking raw material and/or a fuel for power generation and which is managed outdoors, the management method including an information management step, a weather information acquisition step, and an assessment step, wherein the information management step involves managing, for each of piles of the material, powder dust prevention processing information including a presence or absence of existing powder dust prevention processing with respect to the material and a type of the powder dust prevention processing, the weather information acquisition step involves acquiring weather information indicating outdoor meteorological phenomena forecasted for the future, and the assessment step involves assessing an occurrence of powder dust for each of the piles based on the powder dust prevention processing information and the weather information.

A management program of a material which is a steelmaking raw material and/or a fuel for power generation and which is managed outdoors, the management program causing a computer to function as an information managing unit, a weather information acquiring unit, and an assessing unit, wherein the information managing unit is configured to manage, for each of piles of the material, powder dust prevention processing information including a presence or absence of existing powder dust prevention processing with respect to the material and a type of the powder dust prevention processing, the weather information acquiring unit is configured to acquire weather information indicating outdoor meteorological phenomena forecasted for the future, and the assessing unit is configured to assess an occurrence of powder dust for each of the piles based on the powder dust prevention processing information and the weather information.

It is needless to say that the present invention is not limited to the above.

According to the present invention, an occurrence of powder dust can be assessed while taking into consideration an environment in which a pile is placed and processing applied to the pile.

### Brief Description of Drawings

[Fig. 1] Fig. 1 is a schematic view showing a management system according to a present embodiment.
[Fig. 2] Fig. 2 is a schematic view showing a functional configuration of a management apparatus according to the present embodiment.
[Fig. 3] Fig. 3 represents an example of a screen output to an output apparatus according to the present embodiment.
[Fig. 4] Fig. 4 is a schematic view showing a hardware configuration of the management apparatus according to the present embodiment.
[Fig. 5] Fig. 5 is a flowchart of a management method according to the present embodiment.

### Description of Embodiment

Hereinafter, an embodiment of the present invention will be described with reference to the drawings. Various feature items shown in the embodiment described below can be combined with each other.

A program for realizing software related to the present embodiment may be provided as a computer-readable non-transitory recording medium, provided so as to be downloadable from an external server, or provided so as to be run on an external computer such that functions thereof are realized on a client terminal (so-called cloud computing).

In addition, a "unit" as referred to in the present embodiment may include, for example, a combination of hardware resources implemented by a circuit in a broad sense and information processing by software which may be specifically implemented by such hardware resources. Furthermore, while various kinds of information are handled in the present embodiment, for example, such information are to be represented by a physical value of a signal value representing a voltage or a current, a level of a signal value as an aggregate of binary bits constituted of 0 or 1, or a quantum superposition (a so-called quantum bit), and communication and calculations can be executed on the circuit in a broad sense.

Moreover, the circuit in a broad sense is a circuit which is realized by at least appropriately combining a circuit, circuitry, a processor, a memory, and the like. In other words, a circuit in a broad sense includes an application specific integrated circuit (ASIC), a programmable logic device (for example, a simple programmable logic device (SPLD), a complex programmable logic device (CPLD), or a field programmable gate array (FPGA)), and the like.

### <Management system>

A management system according to the present embodiment is a management system of a material which is a steelmaking raw material and/or a fuel for power generation and which is managed outdoors. Specifically, the management system includes an information managing unit, a weather information acquiring unit, and an assessing unit. The information managing unit is configured to manage, for each of piles of the material, powder dust prevention processing information including a presence or absence of existing powder dust prevention processing with respect to the material and a type of the powder dust prevention processing. In addition, the weather information acquiring unit is configured to acquire weather information indicating outdoor meteorological phenomena forecasted for the future. Furthermore, the assessing unit is configured to assess an occurrence of powder dust for each of the piles based on the powder dust prevention processing information and the weather information.

In this case, a "steelmaking raw material" refers to a material used as a raw material and fuel for steelmaking at a steelmaking facility such as ironworks and examples thereof include coal, iron, dust, slag, coke, and sintered ore as well as auxiliary materials such as limestone and dolomite. In addition, a "fuel for power generation" refers to a material used as a fuel for generating power at a power-generating facility such as an electric power plant and examples thereof include coal and biomass fuel.

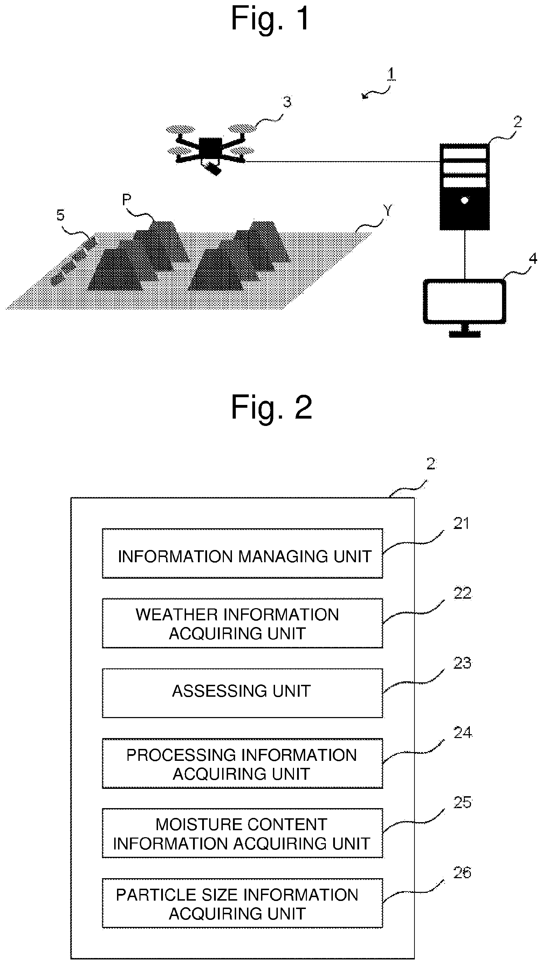

In addition, although not essential components, the management system according to the present embodiment may include one or two or more of a processing information acquiring unit, a moisture content information acquiring unit, a particle size information managing unit, a first output unit, a second output unit, a processing executing unit, and a moisture content information measuring unit. A management system including all of these units will be mainly described with reference to Fig. 1 to be described below.

### [Functional configuration of management system]

Fig. 1 is a schematic view showing a management system according to the present embodiment. A management system 1 includes a management apparatus 2, a moisture content information measurement apparatus 3, an output apparatus 4, and a processing executing unit 5.

Among these components, the management apparatus 2 controls information processing for managing materials in the management system 1. Fig. 2 is a schematic diagram showing a functional configuration of a management apparatus according to the present embodiment. As shown in Fig. 2, the management apparatus 2 according to the present embodiment mainly includes an information managing unit 21, a weather information acquiring unit 22, and an assessing unit 23. In addition, the management apparatus 2 includes a processing information acquiring unit 24, a moisture content information acquiring unit 25, and a particle size information acquiring unit 26. While the moisture content information measurement apparatus 3 is an example of the moisture content information measuring unit, a description will be hereinafter given without particularly distinguishing the two. In addition, the output apparatus 4 is an example of the first output unit and the second output unit.

### [Functions of management system]

Hereinafter, a function of each unit of the management system 1 will be described in specific terms.

### [Information managing unit]

The information managing unit 21 is configured to manage, for each pile P of a material, powder dust prevention processing information including a presence or absence of existing powder dust prevention processing with respect to the material and a type of the powder dust prevention processing.

In this case, "powder dust prevention processing" refers to processing applied to the pile P of the material in order to prevent an occurrence of powder dust from the pile P. Specific examples thereof include coating a pile surface with a powder dust preventing agent, spraying the pile with water in which the powder dust preventing agent has been dissolved or dispersed, mixing the powder dust preventing agent into the pile or a material prior to becoming the pile, and preventing the surface from drying by water spraying.

While the powder dust preventing agent is not particularly limited, examples thereof include an emulsion solution of acrylic resin, acrylic copolymer resin, vinyl acetate resin, synthetic rubber, urethane resin, or asphalt (emulsifier), a solution of a hydrosoluble polymer, and a surfactant composition such as a combination of polyoxyethylene lauryl ether and a polyhydric alcohol (e.g., glycerin). Such a powder dust preventing agent may be applied or sprayed to the surface of the pile P or may be mixed into a raw material constituting the pile.

Although details will be provided later, iron ore and the like have become more and more pulverized in recent years and some materials have a high likelihood of occurrence of powder dust. With respect to such iron ore, for example, when installing a pile in a yard Y, management is performed in which, after subjecting the pile P to processing using a powder dust preventing agent, water is sprayed. In addition, when a large amount of powder dust is expected after installing the pile P in a yard, management involving applying processing using a powder dust preventing agent may be performed. As described above, methods of performing powder dust prevention processing are becoming diverse. Furthermore, a plurality of type of piles P with different components and particle sizes may be arranged in the yard Y and, in some cases, delivery times of the piles P may differ from one another. As a result, among the piles P, the presence or absence of application of a powder dust preventing agent, a frequency of application thereof, the presence or absence of water spraying, and a frequency thereof become different from one another. In consideration thereof, the information managing unit 21 of the management system according to the present embodiment manages, for each pile P, powder dust prevention processing information including a presence or absence of existing powder dust prevention processing and a type of the powder dust prevention processing and makes the presence or absence of existing powder dust prevention processing and the type of the powder dust prevention processing for each pile P usable.

### [Weather information acquiring unit]

The weather information acquiring unit 22 is configured to acquire weather information indicating outdoor meteorological phenomena forecasted for the future.

As the weather information, although not particularly limited, one or two or more of precipitation (an amount of rainfall and an amount of snowfall), air temperature, a wind direction, a wind speed, an amount of solar radiation, relative humidity, and the like can be used. The weather information preferably includes a wind speed in the outdoors which is forecasted for the future. The wind speed is an element which has a major impact on an occurrence of powder dust. In addition, the weather information preferably includes an amount of rainfall. The amount of rainfall is an element which has an impact on preventing an occurrence of powder dust. These pieces of weather information can be obtained from meteorological agencies of various countries such as Japan Meteorological Agency or from weather forecasting companies.

Usually, the yard Y in which the piles P are arranged has an extensive area and, for example, weather information such as a wind speed may differ from one end to an end on an opposite side of the yard Y. Therefore, weather information is preferably acquired for each pile P.

### [Assessing unit]

The assessing unit 23 is configured to assess an occurrence of powder dust for each pile P based on the powder dust prevention processing information and the weather information.

The assessing unit 23 assesses an occurrence of powder dust of each pile P at a specific time point in the future. In this case, a "specific time point in the future" refers to a time point farther into the future than a time point of start of assessment. In addition, the assessing unit 23 assesses an occurrence of powder dust at a same time point as a time point of forecast of weather information which is input information. Specifically, the specific time point in the future is not particularly limited and may be, for example, 1 second or more, 10 seconds or more, 1 minute or more, 1 hour or more, 2 hours or more, 5 hours or more, 10 hours or more, 20 hours or more, 1 day or more, 2 days or more, or 3 days or more after the time point of start of assessment. In addition, the specific time point in the future may be 100 days or less, 70 days or less, 50 days or less, 30 days or less, 20 days or less, 10 days or less, or 7 days or less after the time point of start of assessment.

Specifically, in the assessing unit 23, a possibility of occurrence of powder dust is calculated from weather information by, for example, creating a function or a look-up table of relationships between the weather information and the possibility of occurrence of powder dust or constructing the relationships as a learned model. In doing so, in consideration of powder dust prevention processing information or, in other words, a presence or absence of existing powder dust prevention processing and a type of the powder dust prevention processing, correction is performed by subtracting an amount corresponding to the powder dust prevention processing information from the possibility of occurrence of powder dust. There may be cases where, even if there is existing powder dust prevention processing, the amount corresponding to the powder dust prevention processing is not subtracted depending on contents thereof. Since the occurrence of powder dust which is assessed at this point is only a possibility in terms of predictive assessment, the assessed occurrence of powder dust may differ from a result of an actual occurrence of powder dust.

A method of assessing the occurrence of powder dust is not particularly limited and, for example, the assessment may be made into several grades such as safe/ caution/ danger or a probability may be calculated by assessing an occurrence possibility of powder dust and the assessment may be made in units of 1% in percentage notation.

In addition, as a method of assessing the occurrence of powder dust, for example, a threshold is provided with respect to a numerical value of weather information (for example, a wind speed) and an assessment is made based on whether or not the numerical value of the weather information exceeds the threshold. Specifically, for example, it is determined that powder dust can occur when the numerical value of the weather information exceeds the threshold provided in advance. In doing so, in consideration of powder dust prevention processing information, correction is performed by subtracting an amount corresponding to the powder dust prevention processing information from the possibility of occurrence of powder dust in a similar manner to the method described above. The threshold need not be a threshold which inevitably causes a problem to occur when a value thereof is exceeded and may be a threshold which causes a certain level of possibility to occur when a value thereof is exceeded. In addition, the threshold may be a threshold which takes a safety coefficient into consideration.

As the threshold used in this manner, an empirical numerical value accumulated through actual use may be set or a numerical value specified by carrying out an experiment may be set. In addition, the threshold may be or may not be changed for each material (type, brand, delivery date, or the like) which forms a pile.

Furthermore, a plurality of thresholds or, in other words, a plurality of numerical value bands may be provided and an assessment may be made with respect to a numerical value of weather information. For example, when the wind speed at a specific time point in the future is less than 5 m/s, an assessment of "safe" is made since the possibility of occurrence of powder dust is low, when the wind speed is 5 m/s or more and less than 10 m/s, an assessment of "caution" is made since the possibility of occurrence of powder dust is moderate, and when the wind speed is 10 m/s or more, an assessment of "danger" is made since the possibility of occurrence of powder dust is high. In addition, for example, when the moisture content of the surface layer of a pile at a specific time point in the future is 8% or more, an assessment of "safe" is made since the possibility of occurrence of powder dust is low, when the moisture content of the surface layer is 5% or more and less than 8%, an assessment of "caution" is made since the possibility of occurrence of powder dust is moderate, and when the moisture content of the surface layer is 8% or more, an assessment of "danger" is made since the possibility of occurrence of powder dust is high. In doing so, depending on the powder dust prevention processing information, the value may be corrected or a rank may be downgraded ("caution" may be changed to "safe").

In addition, for example, with respect to a certain pile (hereinafter, referred to as a "pile A"), let us assume that powder dust prevention processing has been performed using a powder dust preventing agent upon installation of the pile A. On the other hand, with respect to another pile (hereinafter, referred to as a "pile B"), let us assume that powder dust prevention processing has not been performed using a powder dust preventing agent upon installation of the pile B. In this case, using only a wind speed as weather information, the wind speed is divided into indicators of three grades. When the wind speed is low, an assessment of "safe" is made for both piles A and B, when the wind speed is moderate, an assessment of "safe" is made for the pile A but an assessment of "caution" is made for the pile B, and when the wind speed is high, an assessment of "danger" is made for both piles A and B. In this manner, assessments may differ between the pile A subjected to powder dust prevention processing and the pile B not subjected to powder dust prevention processing.

Note that methods and criteria of assessment are by no means limited to the specific examples described above.

When the moisture content information acquiring unit 25 to be described later is to be provided, the assessing unit 23 is preferably configured to assess an occurrence of powder dust further based on moisture content information of the pile P of a material acquired by the moisture content information acquiring unit 25 in addition to powder dust prevention processing information and weather information.

Specifically, for example, with respect to piles P with the same powder dust prevention processing information, the pile P with a lower moisture content is assessed to have a higher possibility of occurrence of powder dust as compared to the pile P with a higher moisture content. In addition, a countermeasure such as spraying a larger amount of water on the pile P with the lower moisture content is taken.

In addition, when the particle size information acquiring unit 26 to be described later is to be provided, the assessing unit 23 is preferably configured to assess an occurrence of powder dust further based on particle size information of a material acquired by the particle size information acquiring unit 26 in addition to powder dust prevention processing information and weather information.

Specifically, for example, with respect to piles P with the same powder dust prevention processing information, the pile P constituted of a material with a smaller particle size is assessed to have a higher possibility of occurrence of powder dust as compared to the pile P constituted of a material with a larger particle size. In addition, a countermeasure such as spraying a larger amount of water on the pile P with a smaller particle size is taken.

When a pile information acquiring unit to be described later is to be provided, the assessing unit 23 is preferably configured to assess an occurrence of powder dust for each of piles further based on pile information including one or more selected from the group consisting of an area, a volume, a planar shape, a three-dimensional shape, and a position of the pile P of a material acquired by the pile information acquiring unit in addition to powder dust prevention processing information and weather information.

Note that the "area" and the "planar shape" refer to an area and a planar shape in a plan view of the pile P as viewed from above the yard Y (the pile P).

When the assessing unit 23 uses information of any one or more of the area, the volume, the planar shape, and the three-dimensional shape of the pile P together with, for example, precipitation information, an increase in a water content of a material can be calculated using, for example, a function, a look-up table, a learned model, or the like from any of the area, the volume, the planar shape, and the three-dimensional shape of the pile P and from precipitation. Note that the water content may affect an occurrence of powder dust and, for example, all things being equal, the larger the water content, the lower the likelihood of occurrence of powder dust.

In addition, for example, an amount of water to directly precipitate on the pile P can be predicted from the area of the pile P and precipitation. An increase in water content can also be calculated by obtaining, in advance, a relationship between the amount of water to directly precipitate and an increase in the water content of a material.

Furthermore, for example, wind strength or precipitation at a position of the pile P can be predicted with higher accuracy from the position of the pile P and a wind speed/ wind direction or precipitation. Accordingly, the likelihood of occurrence of powder dust can be more accurately assessed.

### [Processing information acquiring unit]

The processing information acquiring unit 24 is configured to acquire, for each pile P of a material, powder dust prevention processing information including a presence or absence of existing powder dust prevention processing with respect to the material and a type of the powder dust prevention processing.

In addition, the powder dust prevention processing information acquired by the processing information acquiring unit 24 is managed for each pile P by the information managing unit 21 described above.

### [Moisture content information acquiring unit]

The moisture content information acquiring unit 25 is configured to acquire moisture content information indicating a moisture content contained in a material.

The moisture content information is not particularly limited and any of a moisture content of a surface layer of the pile P, an overall mean of the moisture content of the pile P, and a moisture content of a partial sample of the pile P enables the occurrence of powder dust to be assessed with sufficiently high accuracy. However, since the moisture content of the surface layer of the pile P is strongly associated with the occurrence of powder dust, from the viewpoint of further increasing the accuracy of assessment of the occurrence of powder dust, the moisture content information preferably includes the moisture content contained in the surface layer of the pile P.

The moisture content information of the pile P often differs depending on the pile P as described above. Therefore, the moisture content information acquiring unit 25 preferably acquires the moisture content information for each pile P and provides a moisture content information managing unit (not illustrated) to manage the moisture content information.

### [Particle size information acquiring unit]

The particle size information acquiring unit 26 is configured to acquire particle size information indicating a particle size of a material.

A method of measuring a particle size acquired in this case is not particularly limited and examples thereof include a method of measuring an average particle size by laser diffractometry, a method of measuring an arithmetic mean particle size of a particle image obtained by electron microscope observation, and the like. Alternatively, the particle size may be communicated from a supplier upon delivery of the material or measured by a manager side of the management system.

The particle size information of the pile P often differs depending on the pile P as described above. Therefore, preferably, the particle size information is also acquired for each pile P and a particle size information managing unit (not illustrated) is provided to manage the particle size information.

### [Moisture content information measuring unit]

A moisture content information measuring unit 3 is configured to measure moisture content information indicating a moisture content contained in a material.

When the moisture content information to be measured is a moisture content of a surface layer of the pile P, the moisture content of the surface layer can be calculated based on spectral information obtained by imaging from, for example, a position higher than a maximum height of the pile P such as above the pile P. Specifically, an apparatus may be used which performs imaging by mounting a moisture content sensor, a spectral camera, or the like on a flying object such as a drone capable of flying at positions higher than the maximum height of the pile P or a boom such as a reclaimer capable of extending to a height which is higher than the maximum height of the pile P.

When the moisture content information measuring unit 3 performs measurements from above a pile, although a height at which the moisture content information measuring unit 3 is arranged is not particularly limited, the moisture content information measuring unit 3 is preferably arranged at a position higher than the yard Y by 20 m or more and 200 m or less. Specifically, the height at which the moisture content information measuring unit 3 is arranged may be, for example, 25 m or more, 30 m or more, 35 m or more, 40 m or more, 45 m or more, 50 m or more, 55 m or more, 60 m or more, 65 m or more, 70 m or more, 75 m or more, 80 m or more, 85 m or more, 90 m or more, 95 m or more, 100 m or more, 105 m or more, 110 m or more, 115 m or more, 120 m or more, 125 m or more, 130 m or more, or 135 m or more and may be 195 m or less, 190 m or less, 185 m or less, 180 m or less, 175 m or less, 170 m or less, 165 m or less, or 160 m or less.

Area information measured by the moisture content information measuring unit 3 may be transmitted to the moisture content information acquiring unit 25 by communicating therewith or may be recorded in a recording medium connected to the moisture content information measuring unit 3, and then acquired by the moisture content information acquiring unit 25 via the recording medium.

In addition, when the measured moisture content information is a moisture content of a partial sample of the pile P, while a method of measuring a moisture content of a material is not particularly limited, for example, the moisture content can be measured by a moisture meter adopting a near-infrared system, a microwave system, an electrical capacitance system, or the like, a thermogravimeter, a dry weight method, and the like. When the measured moisture content information is an overall mean of the moisture content of the pile P of the pile P, a sampled location may be adopted as an average of a plurality of locations or the entire pile may be mixed and sampled to measure a moisture content in a similar manner.

### [First output unit]

A first output unit 4a is configured to display, for each pile P, an assessment result of an occurrence of the powder dust by the assessing unit.

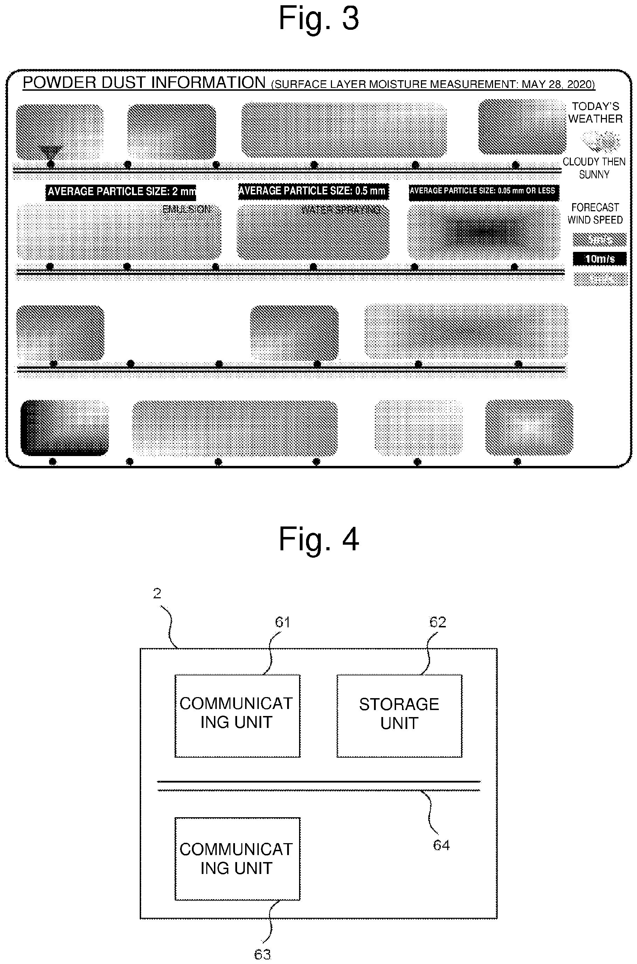

Hereinafter, an example of an output by the management system 1 according to the present embodiment will be described. Fig. 3 represents an example of a screen output to the output apparatus 4 according to the present embodiment. The output screen shows an image of a plan view of an entire yard as viewed from above. On the output screen, by also taking a moisture content of a surface layer into consideration, locations are displayed such that the higher the assessed possibility of occurrence of powder dust of a location (in the example of the three-grade assessment described earlier, an order of "danger", "caution", and "safe"), the darker the tint in which the location is displayed. In addition, on the output screen, piles of which images display "emulsion" and "water spraying" in the top right of the images respectively represent piles on which processing using an emulsion resin solution and water spraying have been applied. Furthermore, an "average particle size" is displayed above each pile. The display of "emulsion" and "water spraying" may be set to disappear after a certain period of time in consideration of, for example, a time it takes for an effect of emulsion resin coating or water spraying to dissipate.

Today's weather and a forecast wind speed are shown on a right side of the output screen. Three vertically-arranged bands with respect to the forecast wind speed respectively represent the wind speed on the day, the wind speed for three days later, and the wind speed for seven days later. In the example of the three-grade assessment described earlier, the bands of wind speeds are also displayed in dark colors in the order of "danger", "caution", and "safe". In this example, an assessment of "danger" is made when the wind speed is 10 m/s or more, an assessment of "caution" is made when the wind speed is 5 m/s or more and less than 10 m/s, and an assessment of "safe" is made when the wind speed is less than 5 m/s.

While the example shown in Fig. 3 represents an example of tinting in accordance with the possibility of occurrence of powder dust on an image of the pile P, an output result of the management system 1 according to the present embodiment need not be displayed on an actual image taken from above the pile P and may be displayed on a model diagram. In addition, the output screen may or may not show a particle size of a material, today's weather, and forecast wind speeds as shown in Fig. 3. Furthermore, the output screen may or may not show information other than a particle size of a material, today's weather, and forecast wind speeds.

In addition, while the possibility of occurrence of powder dust on a pile and a wind speed are displayed in dark tints in the order of "danger", "caution", and "safe" in Fig. 3, coloring may be performed instead and, for example, a location where an assessment of "danger" is made may be colored red, a location where an assessment of "caution" is made may be colored yellow, and a location where an assessment of "safe" is made may be colored green in order to increase visibility.

Furthermore, in the example shown in Fig. 3, a processing executing unit (in this example, a water spraying apparatus) is provided below each pile and, in Fig. 3, the processing executing unit is schematically indicated by a circle. As shown in Fig. 3, a situation where water is sprayed to a pile from the processing executing unit may be displayed in real time.

As described above, by displaying an assessed possibility of occurrence of powder dust, weather information, a moisture content of a surface layer of the pile P, and the like so as to be visually recognizable, an operator or the like can quickly come up with a response to the occurrence of powder dust and, at the same time, overlooking of problems can be suppressed.

### [Second output unit]

A second output unit 4b is configured to display, for each pile P, a presence or absence of existing powder dust prevention processing.

Displaying the presence or absence of existing powder dust prevention processing for each pile P in this manner makes it easier for an operator to determine the necessity of new powder dust prevention processing (powder dust preventing agent, water spraying, or the like) for each pile P.

In addition to the presence or absence of powder dust prevention processing, the second output unit 4b may display a type of the powder dust prevention processing, a date and time of execution of the powder dust prevention processing, and the like for each pile P. When a plurality of types of powder dust prevention processing are performed, although a display format thereof is not particularly limited, all of the types of powder dust prevention processing may be displayed or only latest powder dust prevention processing may be displayed.

While the first output unit 4a and the second output unit 4b have been described separately for convenience's sake, as the first output unit 4a and the second output unit 4b, a same output apparatus 4 such as that shown in Fig. 1 may be used or different output apparatuses may be used.

### [Processing executing unit]

The processing executing unit 5 is configured to apply new powder dust prevention processing on a specific pile based on an assessment result of an occurrence of the powder dust by the assessing unit.

The processing executing unit 5 may automatically apply powder dust prevention processing with respect to a specific pile based on an assessment result of the occurrence of powder dust by the assessing unit or, for example, by displaying the necessity of powder dust prevention processing or the like on the output apparatus 4, the processing executing unit 5 may entrust the operator with a determination and have the operator manually apply the powder dust prevention processing.

When there is existing powder dust prevention processing, the new powder dust prevention processing may be powder dust prevention processing of a same type as the existing powder dust prevention processing or powder dust prevention processing of a different type from the existing powder dust prevention processing.

### [Pile information acquiring unit]

Although not an essential component, the management system 1 may include a pile information acquiring unit (not illustrated). The pile information acquiring unit is configured to acquire pile information including one or more selected from the group consisting of an area, a volume, a planar shape, a three-dimensional shape, and a position of a pile P of a material.

By acquiring pile information including one or more selected from the group consisting of an area, a volume, a planar shape, a three-dimensional shape, and a position of the pile P of a material in this manner and using the pile information together with weather information, a moisture content contained in the material at a specific time point in the future can be appropriately predicted.

### [Pile information measuring unit]

Although not an essential component, the management system 1 may include a pile information measuring unit (not illustrated). The pile information measuring unit is configured to measure pile information including one or more selected from the group consisting of an area, a volume, a planar shape, a three-dimensional shape, and a position of a pile P of a material.

Among pile information, the area, the volume, the planar shape, and the three-dimensional shape of the pile P can be calculated in consideration of scale from an image obtained by imaging from, for example, a position higher than a maximum height of the pile P such as above the pile P. Specifically, an example of the pile information measuring unit is an apparatus which performs imaging by mounting an imaging apparatus on a flying object such as a drone capable of flying at positions higher than the maximum height of the pile P or a boom such as a reclaimer capable of extending to a height which is higher than the maximum height of the pile P. In addition, the area of the pile P can also be measured by a survey inside the yard Y in which the piles P are arranged. While the pile information measuring unit is not particularly limited, the flying object described above is preferably used from the viewpoint of easiness of measurement of pile information. In the pile information measuring unit, another apparatus which measures one or more of the area, the volume, the planar shape, and the three-dimensional shape of the pile P may be added to a flying object such as a drone, a boom such as a reclaimer, or the like which constitutes the moisture content information measuring unit 3 or a sensor such as a spectral camera which constitutes the moisture content information measuring unit 3 may have such a function. It is needless to say that the pile information measuring unit and the moisture content information measuring unit 3 may also be configured as different apparatuses.

In addition, the position of the pile P among pile information is not particularly limited as long as the position of the pile can be quantitatively measured. For example, a global position may be measured by a device such as a global positioning system (GPS) or other global navigation satellite systems (GNSSs) or a position in an entire image in the yard obtained by imaging from a position higher than the maximum height of the pile P such as above the pile P may be measured.

While a height at which the pile information measuring unit is arranged is not particularly limited, the pile information measuring unit is preferably arranged at a position higher than the yard Y by 20 m or more and 200 m or less. Specifically, the height at which the pile information measuring unit is arranged may be, for example, 25 m or more, 30 m or more, 35 m or more, 40 m or more, 45 m or more, 50 m or more, 55 m or more, 60 m or more, 65 m or more, 70 m or more, 75 m or more, 80 m or more, 85 m or more, 90 m or more, 95 m or more, 100 m or more, 105 m or more, 110 m or more, 115 m or more, 120 m or more, 125 m or more, 130 m or more, or 135 m or more and may be 195 m or less, 190 m or less, 185 m or less, 180 m or less, 175 m or less, 170 m or less, 165 m or less, or 160 m or less.

Pile information measured by the pile information measuring unit may be transmitted to the pile information acquiring unit by communicating therewith or may be recorded in a recording medium connected to the pile information measuring unit, and then acquired by the pile information acquiring unit via the recording medium.

### [Other components]

As other components, although not illustrated, an initial processing determining unit which determines, based on particle size information of a material, the necessity of initial (upon delivery of the material) powder dust prevention processing (for example, coating of a pile surface by an emulsion resin solution) in accordance with a particle size of the material and an initial processing executing unit which executes the initial processing based on a determination result of the initial processing determining unit may be provided. For example, the initial processing determining unit may be included in the management apparatus 2 or included in another management apparatus. In addition, the initial processing executing unit may be configured to execute processing in accordance with an instruction as, for example, an initial processing execution apparatus.

With the management system 1 according to the present embodiment, an occurrence of powder dust can be assessed while taking into consideration an environment in which a pile is placed and processing applied to the pile and, accordingly, appropriate countermeasure processing can be applied to the pile P before powder dust actually occurs.

### [Hardware configuration of management system]

Fig. 4 is a schematic view showing a hardware configuration of the management apparatus 2 according to the present embodiment. As shown in Fig. 4, the management apparatus 2 includes a communicating unit 61, a storage unit 62, and a control unit 63, and these constituent elements are electrically connected via a communication bus 64 inside the management apparatus 2. Hereinafter, the constituent elements will be further described.

While the communicating unit 61 is preferably wired communication means such as USB, IEEE 1394, Thunderbolt, and wired LAN network communication, the communicating unit 61 can include wireless LAN network communication, mobile communication such as 3G/LTE/5G, Bluetooth (registered trademark) communication, and the like when necessary. In other words, more preferably, the communicating unit 61 is implemented as an assembly of the plurality of communication means described above. Accordingly, exchange of information and commands is executed between the management apparatus 2 and other devices capable of communicating with the management apparatus 2.

The storage unit 62 stores various information defined according to the description provided above. The storage unit 62 can be implemented as, for example, a storage device such as a solid state drive (SSD) or a memory such as a random access memory (RAM) which stores information (arguments, arrays, and the like) temporarily necessary in relation to operation of a program. In addition, the storage unit 62 may be a combination thereof. Furthermore, the storage unit 62 stores various programs which can be read by the control unit 63 to be described later.

The control unit 63 performs processing and control of overall operations related to the management apparatus 2. The control unit 63 is, for example, a central processing unit (CPU, not illustrated). The control unit 63 realizes various functions related to the management apparatus 2 by reading a predetermined program stored in the storage unit 62. In other words, by causing information processing by software (stored in the storage unit 62) to be concretely realized by hardware (the control unit 63), the information processing can be executed as respective functional units in the control unit 63 as shown in Fig. 4. While a single control unit 63 is notated in Fig. 4, the reality is not limited thereto and a configuration may be adopted in which a plurality of control units 63 are provided for each function or a single control unit and a plurality of control units may be combined.

### <Management method>

A management method according to the present embodiment is a management method of a material which is a steelmaking raw material and/or a fuel for power generation and which is managed outdoors, and the management method includes an information management step, a weather information acquisition step, and an assessment step. The information management step is a step of managing, for each of piles of the material, powder dust prevention processing information including a presence or absence of existing powder dust prevention processing with respect to the material and a type of the powder dust prevention processing. In addition, the weather information acquisition step is a step of acquiring weather information indicating outdoor meteorological phenomena forecasted for the future. Furthermore, the assessment step is a step of assessing an occurrence of powder dust for each of the piles based on the powder dust prevention processing information and the weather information.

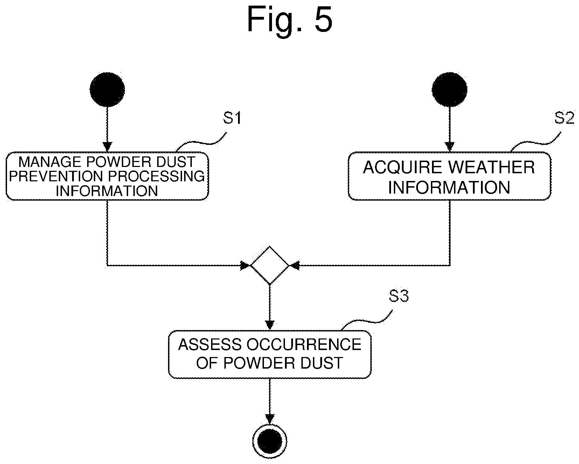

Fig. 5 is a flowchart of the management method according to the present embodiment. As shown in Fig. 5, in the management method according to the present embodiment, powder dust prevention processing information is managed (information management step S1), weather information is acquired (weather information acquisition step S2), and with the powder dust prevention processing information and the weather information as input information, an occurrence of powder dust is assessed for each of piles (assessment step S3). In this case, a precedence of order of the information management step S 1 and the weather information acquisition step S2 does not matter and the information management step S 1 may be performed first, the weather information acquisition step S2 may be performed first, or the information management step S 1 and the weather information acquisition step S2 may be performed at the same time.

Note that the management method according to the present embodiment may be provided with a processing information acquisition step, a moisture content information acquisition step, a particle size information acquisition step, a moisture content information measurement step, a first output step, a second output step, and a processing execution step. Since these steps are respectively similar to operations of the processing information acquiring unit, the moisture content information acquiring unit, the particle size information acquiring unit, the moisture content information measuring unit, the first output unit, the second output unit, and the processing executing unit, descriptions thereof will be omitted here.

### <Management program>

A management program according to the present embodiment is a management program of a material which is a steelmaking raw material and/or a fuel for power generation and which is managed outdoors, and the management program causes a computer to function as an information managing unit, a weather information acquiring unit, and an assessing unit. Since the information managing unit, the weather information acquiring unit, and the assessing unit have been described above, descriptions thereof will be omitted here.

The present invention is not limited whatsoever to the embodiment described above and can be implemented with appropriate modifications.

### Reference Signs List

- 1: Management system
- 2: Management apparatus
- 21: Information managing unit
- 22: Weather information acquiring unit
- 23: Assessing unit
- 24: Processing information acquiring unit
- 25: Moisture content information acquiring unit
- 26: Particle size information acquiring unit
- 3: Moisture content information measuring unit or moisture content information measurement apparatus
- 4: Output apparatus
- 4a: First output unit
- 4b: Second output unit
- 5: Processing executing unit
- 61: Communicating unit
- 62: Storage unit
- 63: Control unit
- 64: Communication bus
- Y: Yard
- P: Pile

## Claims

1. A management system of a material which is a steelmaking raw material and/or a fuel for power generation and which is managed outdoors, the management system comprising:
an information managing unit, a weather information acquiring unit, and an assessing unit, wherein
the information managing unit is configured to manage, for each of piles of the material, powder dust prevention processing information including a presence or absence of existing powder dust prevention processing with respect to the material and a type of the powder dust prevention processing,
the weather information acquiring unit is configured to acquire weather information indicating outdoor meteorological phenomena forecasted for the future, and
the assessing unit is configured to assess an occurrence of powder dust for each of the piles based on the powder dust prevention processing information and the weather information.

2. The management system according to claim 1, wherein
the weather information includes a wind speed in the outdoors forecasted for the future.

3. The management system according to claim 1 or 2, further comprising
a moisture content information acquiring unit, wherein
the moisture content information acquiring unit is configured to acquire moisture content information indicating a moisture content contained in the material.

4. The management system according to claim 3, wherein
the moisture content information includes a moisture content contained in a surface layer of the piles.

5. The management system according to any one of claims 1 to 4, further comprising
a first output unit, wherein
the first output unit is configured to display, for each of the piles, an assessment result of an occurrence of the powder dust by the assessing unit.

6. The management system according to any one of claims 1 to 5, further comprising
a second output unit, wherein
the second output unit is configured to display, for each of the piles, a presence or absence of existing powder dust prevention processing.

7. The management system according to any one of claims 1 to 6, further comprising
a processing executing unit, wherein
the processing executing unit is configured to apply new powder dust prevention processing on a specific pile based on an assessment result of an occurrence of the powder dust by the assessing unit.

8. A management apparatus of a material which is a steelmaking raw material and/or a fuel for power generation and which is managed outdoors, the management apparatus comprising:
an information managing unit, a weather information acquiring unit, and an assessing unit, wherein
the information managing unit is configured to manage, for each of piles of the material, powder dust prevention processing information including a presence or absence of existing powder dust prevention processing with respect to the material and a type of the powder dust prevention processing,
the weather information acquiring unit is configured to acquire weather information indicating outdoor meteorological phenomena forecasted for the future, and
the assessing unit is configured to assess an occurrence of powder dust for each of the piles based on the powder dust prevention processing information and the weather information.

9. A management method of a material which is a steelmaking raw material and/or a fuel for power generation and which is managed outdoors, the management method comprising:
an information management step, a weather information acquisition step, and an assessment step, wherein
the information management step involves managing, for each of piles of the material, powder dust prevention processing information including a presence or absence of existing powder dust prevention processing with respect to the material and a type of the powder dust prevention processing,
the weather information acquisition step involves acquiring weather information indicating outdoor meteorological phenomena forecasted for the future, and
the assessment step involves assessing an occurrence of powder dust for each of the piles based on the powder dust prevention processing information and the weather information.

10. A management program of a material which is a steelmaking raw material and/or a fuel for power generation and which is managed outdoors,
the management program causing a computer to function as an information managing unit, a weather information acquiring unit, and an assessing unit, wherein
the information managing unit is configured to manage, for each of piles of the material, powder dust prevention processing information including a presence or absence of existing powder dust prevention processing with respect to the material and a type of the powder dust prevention processing,
the weather information acquiring unit is configured to acquire weather information indicating outdoor meteorological phenomena forecasted for the future, and
the assessing unit is configured to assess an occurrence of powder dust for each of the piles based on the powder dust prevention processing information and the weather information.
